# EUROPEAN PATENT SPECIFICATION

(11) **EP 0 770 154 B1**
(45) Date of publication and mention of the grant of the patent: **23.09.1998**
(21) Application number: 95926624.8
(22) Date of filing: 10.07.1995
(51) Int. Cl.: D04H 1/54, B29C 31/04

(54) **FIBERS CLUSTERS MOLDING PROCESS**
VERFAHREN ZUM FORMEN VON FASERAGGREGATEN
PROCEDE DE MOULAGE UTILISANT DES AMAS DE FIBRES

(30) Priority: 13.07.1994 US 274501; 28.06.1995 US 495875
(43) Date of publication of application: 02.05.1997
(73) Proprietor: E.I. DU PONT DE NEMOURS AND COMPANY, Wilmington Delaware 19898 (US)
(72) Inventor: CURRAN, Thomas, A., Wilmington, DE 19803-3918 (US); JOHANSON, William, G., Rochester Hills, MI 48306-3107 (US); LADLEY, Nathan, W., New Castle, DE 19720 (US); SCARBOROUGH, O'Dell, Sicklerville, NJ 08081 (US); FRANKOSKY, Michael Stephen, Hockessin, DE 19707 (US)
(74) Representative: Woodcraft, David Charles
(86) International application number: PCT/US95/08439
(87) International publication number: WO 96/02693

(56) References cited:
- EP-A- 0 276 682
- WO-A-86/06114
- WO-A-92/01104
- GB-A- 815 630
- US-A- 5 294 392
- PATENT ABSTRACTS OF JAPAN vol. 015 no. 413 (C-0877) ,22 October 1991 & JP,A,03 170112 (NHK SPRING CO LTD) 23 July 1991,
- PATENT ABSTRACTS OF JAPAN vol. 017 no. 660 (M-1522) ,7 December 1993 & JP,A,05 220278 (NHK SPRING CO LTD) 31 August 1993,
- PATENT ABSTRACTS OF JAPAN vol. 950 no. 005 & JP,A,07 124967 (SHIGERU KOGYO KK;OTHERS: 01) 16 May 1995,

## Description

### FIELD OF THE INVENTION

This invention concerns cushions or seating for furniture pieces, such as armchairs, chairs, car seats and the like, and more particularly to a process and apparatus providing molded bonded polyester fiber articles from fiber clusters of the polyester fiber blended with binder fibers.

### BACKGROUND OF THE INVENTION

Automotive manufacturers face a need for lighter cars as governmental forces are seeking higher mileage per gallon standards for new cars. Manufacturers are also interested in having materials which can be reused or recycled to be used as components within the car.

Thermally-bonded polyester fiber structures are well known for use in furnishings such as mattresses, chairs and car seats where high support and durability are required. For example, see U.S Pat. No. 4,668,562 and 4,753,693. One advantage of using such polyester fiber structures is that they can be depolymerized into basic monomers by known methods, such as methanolysis, for reuse. Polyester fibers can also be directly recycled as raw materials for new parts.

A typical five passenger vehicle contains 7.46 kilograms (twenty pounds) of polyurethane foam for seating while molded seats using the present invention weigh 5.23 kilograms (14 pounds), a savings of thirty percent for equivalent performance.

Heretofore, batch processes such as the one disclosed in U.S. Patent No. 5,294,392 have been used to mold cushions for use as a car seat. In automotive applications, however, production runs are continuous and extended. Processes have to be cost effective and involve a minimum amount of labor and time per part. Prior inventions have focused on methods to fill a mold effectively. There has been no method, however, which will completely automate the process of manufacture of recyclable seat cushions for automobiles in a cost effective and time efficient manner.

U.S. Patent No. 5,294,392 discloses a process for molding cushions comprising the steps of loading a continuous fiber cluster web into a mold, placing the mold in an oven, placing the mold in a cooling chamber, and removing a molded cushion from the mold. Several problems exist with the process disclosed in U.S. Patent No. 5,294,392. First, the fiber clusters must be in the form of a continuous web, which leads to the time consuming steps of trimming and recycling waste. The continuous web also makes it difficult to vary the density of the cushion along an asymmetrical axis. Second, the entire mold must be placed in an oven in order to bond the fiber clusters, which requires a larger oven having increased capital and operating costs. Third, the entire mold must be placed in a cooling chamber, which again requires oversized cooling equipment resulting in increased capital costs and wasted energy.

Applicants have disclosed and claimed herein an improved process for molding loose fiber clusters wherein heated air from an oven is ducted to the mold such that the binder fibers are melted without placing the mold in the oven. The exhaust air is recovered from the mold and recycled to the oven. Cool air is then ducted to the mold to cool the cushion. Again, the exhaust air is recovered from the mold and recycled to the oven. Applicants process is energy efficient and easily automated, thereby leading to cost and cycle time advantages over alternative processes for molding seat cushions.

### SUMMARY OF THE INVENTION

A process and apparatus are provided for molding recyclable cushions from fiber clusters comprised of polyester fibers with thermally-bondable binder fibers. The process of forming such cushions involves the steps of positioning a mold at a loading station, loading fiber clusters into the mold, advancing the mold to a heating station where heated air is forced through the mold to activate the binder fibers within the cluster assembly, advancing the mold to a cooling station where cool air is forced through the mold, and removing the molded article when cooled.

In an alternative embodiment of the invention, a scrim sheet or an adhesive may used to encapsulate the fiber clusters prior to closing of the mold and heating of the fibers. Sprayed fibers may also be used as an encapsulation agent in lieu of a scrim sheet or a scrim bag. The fibers are sprayed prior to the closing of the mold.

In another alternative, the fiber clusters may be encapsulated within individual scrim bags prior to being loaded in the mold. Adhesive is placed on the individual bags prior to closing the mold to ensure good contact of the materials in molding.

In another alternative, the molded fiber cluster pad may be encapsulated within a heat shrinkable polyester "bag" subsequent to cushion molding. In this case the bag, upon heating outside a mold, would conform to the shape of the pad and provide the benefits of durability and appearance.

The foregoing summary of the invention will be more clearly understood in light of the detailed description which follows.

### BRIEF DESCRIPTION OF THE DRAWINGS

FIG. 1 is a top plan view of a rotary table and operating stations.

FIG. 2 is a view of a base and lid of a porous mold having a non-regular shape.

FIG. 3 is a view of a vortex accumulator.

FIG. 4 is a side view of filling means.

FIG. 5a and 5b are views of stationary hoses for loading the mold.

FIG. 6a and 6b are side views of directed inlets with an associated ram for loading the mold.

FIG. 7a and 7b are views of a loss-in-weight device and an associated ram for loading the mold.

FIG. 8 is a side view of the lid installation station.

FIG. 9 is a side view of the heating station.

FIG. 10 is a side view of the cooling station.

### DETAILED DESCRIPTION OF THE INVENTION

Fiber clusters are polyester fibers that are randomly arranged and entangled to form a three-dimensional nominally spherical shape, preferably with a minimum of hair extending from the surface, so as to be air-transportable. Such a shape contributes to load support and compression resistance in a molded part.

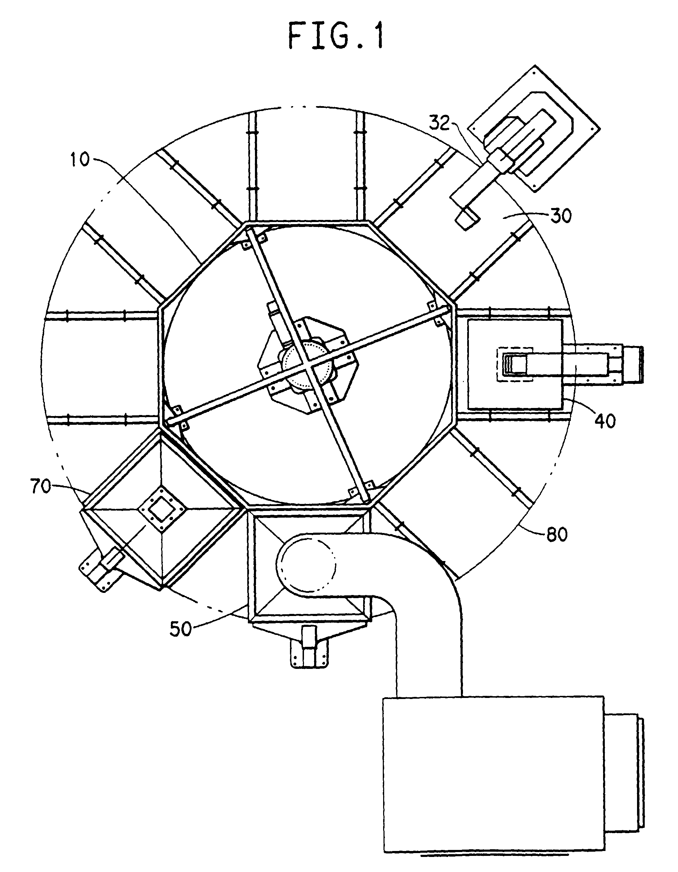

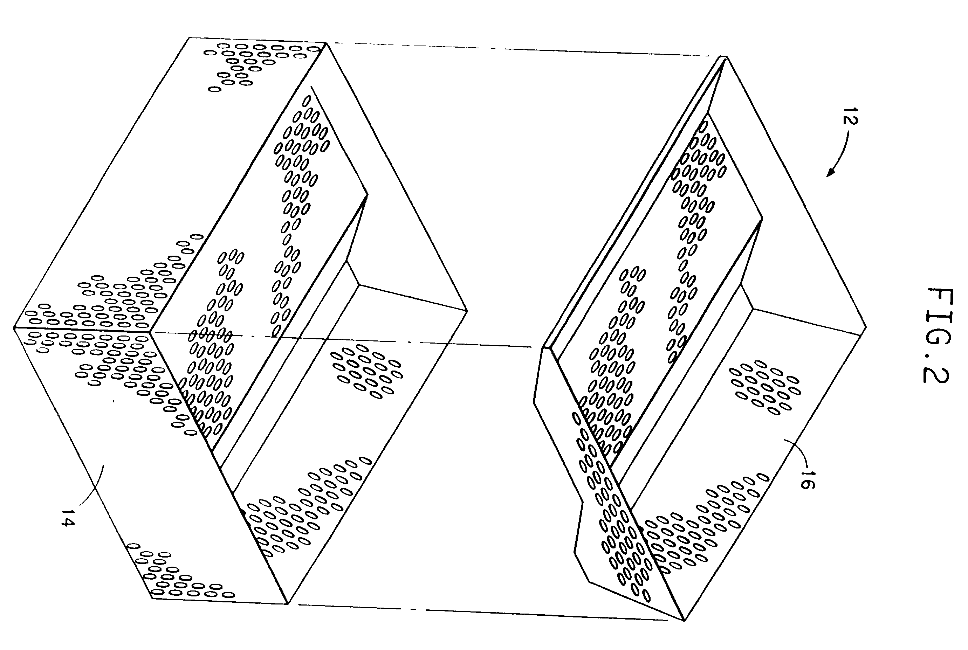

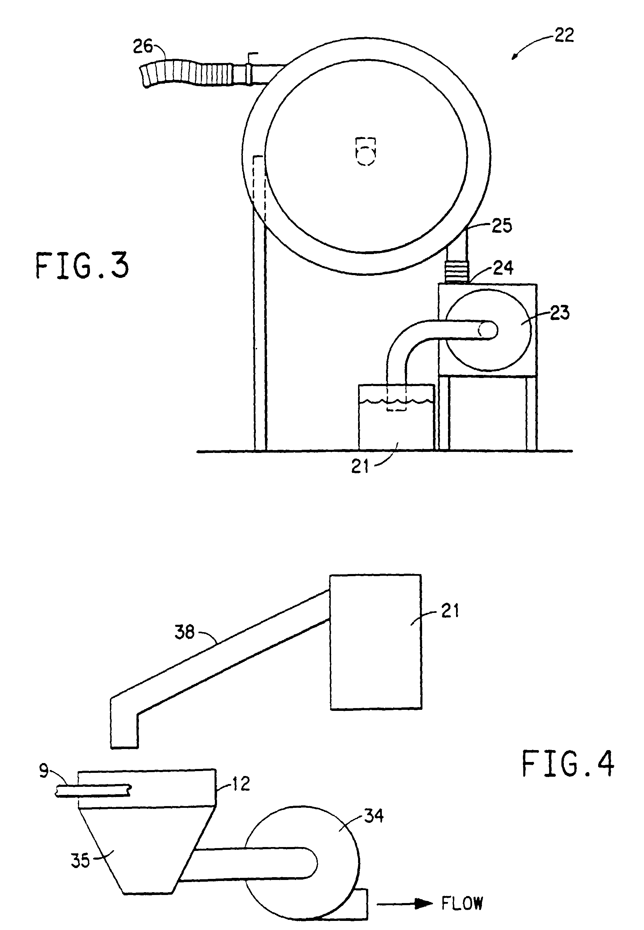

A process according to the present invention is provided which uses rotary table 10 to convey a mold filled with polyester fiber clusters along a series of operating stations to provide a continuous process as illustrated in Fig. 1. Arm 9 of Fig. 4, attached to table 10 of Fig. 1, carries the lower portion of mold 12 of Fig. 2, as it is conveyed to each subsequent station. A rotary table has an advantage of minimizing the space required for the process. Alternatively, the process could be accomplished in a linear fashion with the operating stations located in series. Yet another alternative is to hold a mold stationary and bring the operating stations to the mold.

Mold 12 is fabricated from perforated metal as shown in Fig. 2. Any material which can withstand the molding pressures inherent in the molding process, typically 6.89 - 13.79 kPa (1-2 pounds per square inch), can be used. For example, molds can be fabricated from aluminum, carbon steel or stainless steel. Air flow through the mold is permitted by the open area of the perforated metal sheet. Frequently, the fiber cluster material being molded is more restrictive to air flow than is the perforated metal sheet. If the molded part has areas that have a higher concentration of fiber clusters and are thereby thicker or more dense, the air will not flow through as easily and those areas will not be readily and quickly bonded. In such cases, the air flow is further controlled by the use of baffles or deflectors which are located adjacent the mold, the heating chamber, or both. Mold deflectors are positioned on the exterior of the top of the mold, the bottom, or both. When the deflectors are placed over those areas which would normally bond well, the heated air is redirected to those areas that are difficult to bond. Since the use of deflectors serves to restrict air flow, it is surprising that the total bonding is completed in less time versus not using deflectors.

As an alternative to perforated metals for mold construction, materials having a porous structure can also be used, e.g., DUOCEL® aluminum foam or reticulated vitreous carbon, both available from Energy Research and Generation, Inc., Oakland, CA. Molds can also be fabricated using fixed or removable porous inserts. Mold 12 is fabricated in two or more parts, with base 14 and lid 16 designed as required to provide the final desired shape of the cushion molded. Separate parts of the mold can be hinged for easier closing and opening of the molds.

An example of fiber clusters which can be used, with their preparation and bonding, is disclosed in U.S. 4,794,038. Clusters are typically transported in densely packed containers. Consequently, the fiber clusters must be "opened" before molding, that is reduced in density to 16.02 - 32.04 kg/m³ (1-2 pounds per cubic foot). Such dedensification can be accomplished by manually unloading and opening the clusters and placing the clusters within the mold.

Typical devices such as mechanical pin type belts and rollers to open fiber clusters have a tendency to damage the clusters. Instead, a centrifugal blower device can be used to open the clusters prior to placement in the mold to avoid operator fatigue and increase time savings. A blower feeds clusters into the mold after pulling them out of a shipping container through a fill tube. Alternatively, the clusters can be opened using vortex accumulator 22 of Fig. 3. The clusters are brought from supply source 21 through blower 23 which reduces their density and propels them from outlet duct 24 into inlet 25 of vortex accumulator 22. A vortex air flow tumbles the clusters in the accumulator. A volume of clusters may be held in the accumulator and discharged at any time through the discharge port of the accumulator to fill the mold. The air stream which carries the clusters within the vortex accumulator circulates and then is vented to the outside though a vent designed to prevent discharge of the clusters. To discharge the clusters, the vent valve is closed and the discharge valve is opened to allow the air stream to carry the clusters out through discharge port 26 to the fill station in a uniform flow.

Vortex accumulator 22 can be positioned in either a vertical or horizontal orientation. A horizontal position is preferred since clusters can tend to become trapped by gravity in the lowest point of a vertically-oriented accumulator.

It is desirable to protect a fiber cushion with an outer wrapping of fabric, i.e. a scrim. This provides durability in handling the cushion prior to assembly within the final cover. The scrim provides integrity to minimize peeling or individual cluster flaking. A lightweight polyester spun bonded sheet, such as DuPont SONTARA®, can be used, with a fine layer of polyester adhesive applied to the side contacting the clusters to adhere the scrim sheet to the clusters. The material can be precut and/or pre-sewn before its placement into the mold. Clusters are then placed on top of this scrim sheet. A second scrim sheet can optionally be placed over the clusters prior to the molding operation to provide complete encapsulation of the clusters.

Alternatively, a spray polyester adhesive can be used instead of the scrim sheeting. Such an adhesive would be sprayed onto the molded article after removal from mold 12. The adhesive would harden and toughen the outside layer of clusters of the cushion. Sprayed fibers within an adhesive spray may also be used as an encapsulation agent in lieu of a scrim sheet or a scrim bag.

Within the automotive industry, it is desirable to have variable firmness within the seat cushion. The sides, or bolsters of the seat have to be durable enough to withstand the abuse of entry and exit. Extra side firmness is also desirable during cornering when lateral acceleration during driving causes the occupant to be pushed against the outside of the cushion. On the other hand, a lower density is desired in the middle of the cushion to provide comfortable support for the occupant. To achieve such variable density within the cushion, the amount of clusters deposited within each section of the mold is varied.

At the first station, filling station 30 of FIG. 1, clusters are introduced into mold 12 of Fig. 2. Placement of the fiber clusters within mold 12 can be accomplished by several means. As noted above, clusters can be manually unloaded from a storage container and placed within the mold. Preferably, clusters are introduced into the mold automatically. To fill the mold with variable volumes of clusters, a programmable positioning device, such as a programmable robot 32 of Fig. 1, or powered x-y-z positioning device, not shown, is used to manipulate a mold fill hose through which clusters are conveyed in an air stream. The air hose is manipulated so that it is positioned over various zones of the mold for specific periods of time. Time in position would be dependent upon the amount of firmness desired in that particular zone of the cushion. Using a programmable robot or powered positioning device would enable use of several cushion profiles having unique density requirements. In addition, this would enable great savings in labor as well as creating consistency for a particular seat profile.

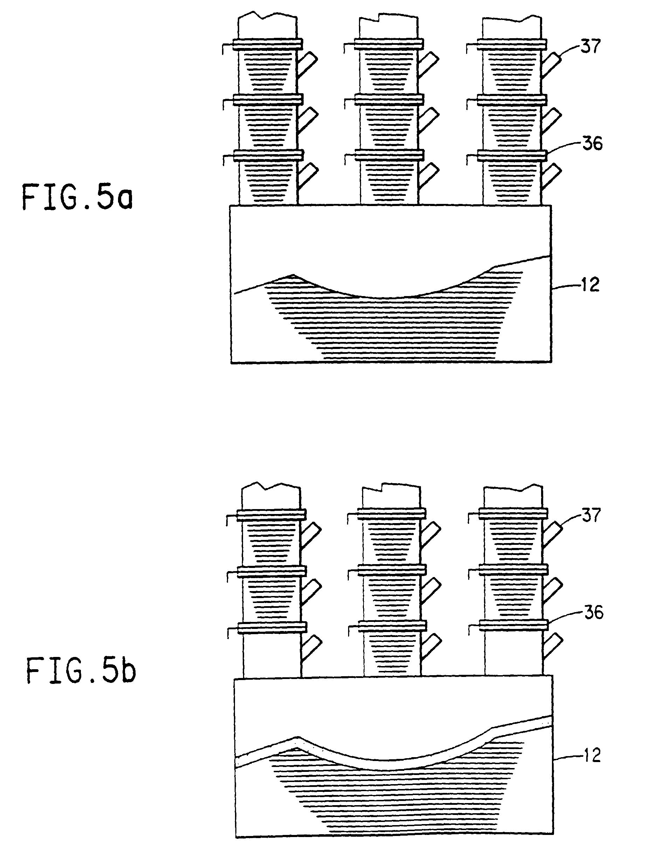

Conveying loose clusters to mold 12 via an airstream creates a turbulent air flow at the discharge outlet of fill hose 38 of Fig. 4, which disturbs the desired placement of clusters. To confine the clusters to the mold as they are received into the mold, a vacuum is pulled on the underside of mold 12 by blower 34 of Fig. 4 through vacuum duct 35. Alternatively, the mold can be filled using stationary hoses positioned over the mold to feed specific zones of Fig. 5a and Fig. 5b. Fiber clusters are fed into each hose and are released into mold 12 by manipulation of gate 36 on each hose. Air tubes 37 allow a stream of air to be used to drive the clusters out of the hose or into the next gated section. Each hose will have its individual weighing and conveying apparatus attached or could be used in series in conjunction with one overall feeder system.

Yet another alternative for variable filling of the mold is to utilize vertical pins which protrude through the bottom surface of the perforated mold to different heights in the mold cavity. This dense pack of pin heights will program a surface which allows clusters to fall in and around that surface. The greater the amount of pins within an area, the lesser the volume of clusters required to fill that zone. After the clusters have been placed in the mold, the pin device is retracted from the perforated mold and the clusters are allowed to settle prior to the molding process.

An alternative method of gating within the mold is to utilize retractable gating rods which protrude through the side surfaces of the perforated mold. These gating rods define fill zones within the mold. Gating rods have the advantage of preventing the fiber clusters from traveling between fill zones but allowing the fiber clusters in the various fill zones to communicate and mingle, thereby eliminating shear lines between the various sections of the molded article. By varying the amount of clusters charged to various fill zones, a variable density article can be produced. For example, a seat cushion can be produced having a relatively low density seating area and a relatively high density bolster area, thereby providing a soft seat having firm lateral support. The use of fill zones eliminates the need for additional steps to achieve fill uniformity, and fill zones can be combined with any of the previously or subsequently described methods of placing the fiber clusters into the mold.

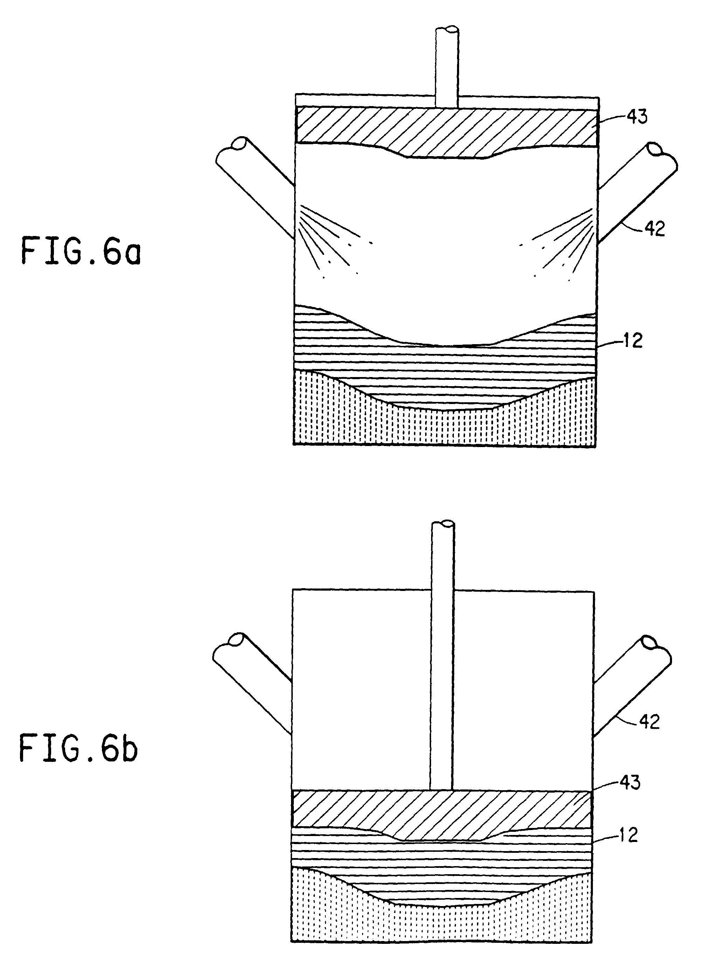

Another alternative is to use a closed mold filling process having multiple cluster flow inlets which direct the clusters to a zone within the mold, as shown in Fig. 6a and Fig. 6b. Clusters are conveyed to inlets of the flow inlet 42 by an air stream or other method. Using an air stream, different flow rates of clusters can be used to give different fill densities within the mold. Ram 43 is lowered onto the clusters after loading to compress the clusters within mold 12 to a final geometry prior to heating. Using a closed mold filling process eliminates the disturbance effects of turbulent air flow associated with using an air stream to convey the clusters to the mold.

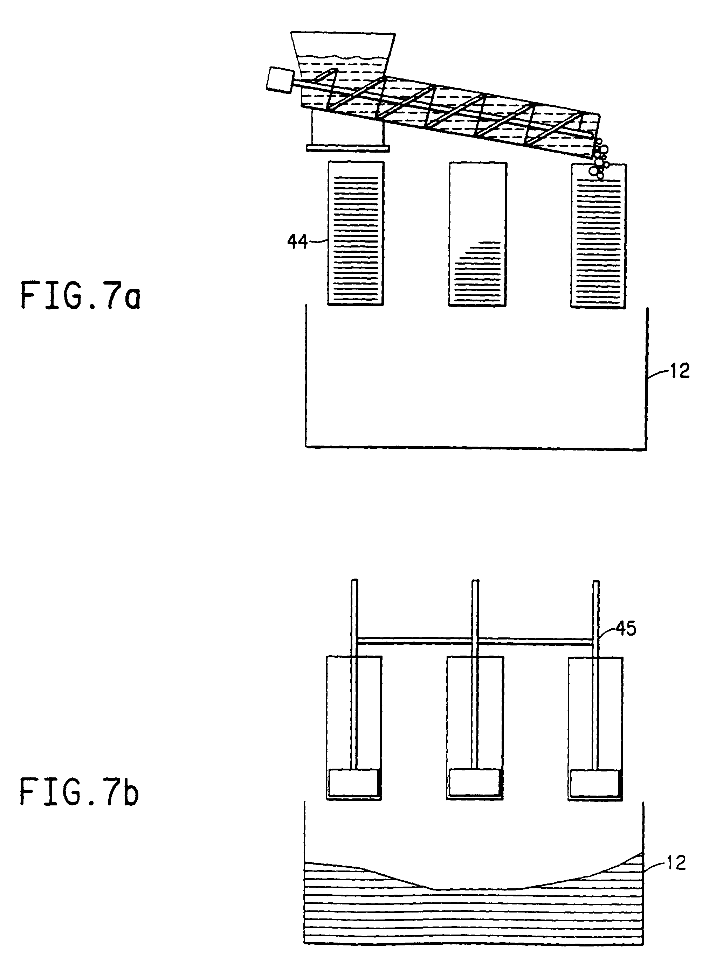

Still another alternative is a loss-in-weight material feeder, Fig. 7a and Fig. 7b, would dispense clusters to individual fill tubes 44 connected to mold 12 in amounts required by the final desired firmness of that particular zone. After tube 44 is filled, ram 45 pushes the clusters out of fill tube 44 and packs the clusters into mold 12. Such a device eliminates the turbulent air flow associated with using an air stream to convey the clusters to the mold.

Another alternative is to use pre-sewn individual bags of pre-weighed clusters which are placed within the mold. Since each bag can be filled with varying amounts of clusters, different densities can be used to achieve desired firmness in various locations within the cushion. An adhesive layer must be present on the external surface of the bag as well as the internal side to ensure that the bags will adhere to each other and create a unified cushion out of the individual bags.

Optionally, wires can be places within the mold to serve as anchor points for upholstery or as reinforcement for such areas as the bolsters. The wires are commonly ferromagnetic to facilitate positioning in the mold by magnets, but non-ferromagnetic wire could be used where other positioning means are available. In order to improve the bonding between the clusters and the wire, especially wire used for anchor points, the wire can be coated with a polymer which has a melting point below the bonding temperature for the fiber clusters and which is sufficiently viscous at the bonding temperature so as to remain as a coating on the wire. During the cluster molding, the polymer melts and the clusters become imbedded in the melt. Olefins are especially advantages for coating the wire. The attachment between the coated wire and the bonded clusters is greater than the typical wire to polyurethane foam bond in current automotive seating. Alternatively, the olefin wire can be embedded in a polymer netting to form an anchor wire netting assembly. The polymer netting is preferably polyethylene. As with the olefin coated wire, the anchor wire netting assembly can be placed in the mold prior to cluster bonding and thereby provides additional anchoring support.

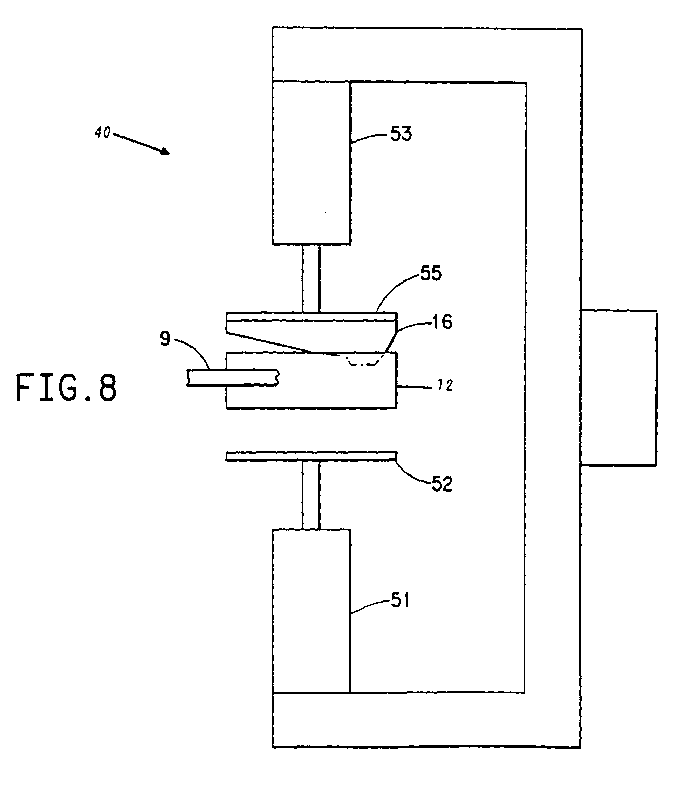

After mold 12 has been charged with the clusters, mold 12 is rotated to lid installation station 40, as shown in Figs. 1 and 8. Optionally, a second scrim sheet is placed over the cluster assembly prior to the closing of mold 12. Hydraulic cylinder 51 of Fig. 8, with large supporting plate 52 activates under mold 12 to support mold base 14 of Fig. 2, and reduce pressure on the rotating table assembly. Mold lid 16 is placed on top of mold base 14. Hydraulic cylinder 53 with large distribution plate 55 activates above mold 12 and applies sufficient pressure to close and latch mold 12. Top and bottom hydraulic cylinders 51 and 53 retract their respective supporting plates 52 and 55 and mold 12 is rotated into heating station 50 as illustrated in Fig. 1.

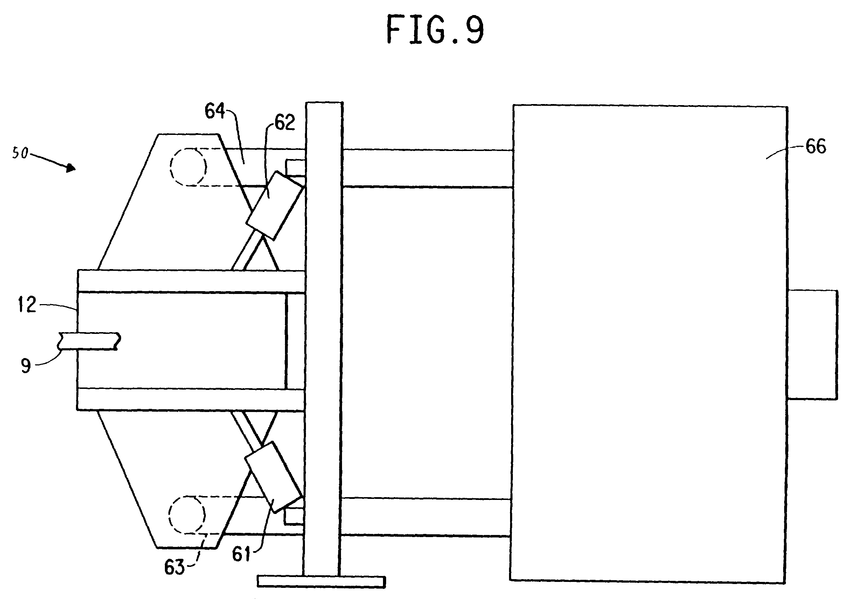

At heating station 50 of Fig. 9, hydraulic cylinders 61 and 62 are activated to position air ducts 63 and 64 into contact with mold 12 to provide a route of air circulation between the mold and the heat source. Forced hot air, between 150-245 degrees C, is supplied to mold 12. The heated air activates the binder fibers within the fiber clusters which provides the adhesive to provide form to the molded part. The air is heated by use of commercial oven 66 which has been modified to include hydraulically operated ducts for directing the air flow. Preferably, hot air enters the mold cavity from the bottom and exits at the top of the mold. Alternatively, heated air can be fed through the top surface of the mold, or can be directed alternately through the top and bottom mold surfaces. To save energy, hot air can be collected, reheated to the working temperature and reused. The heating cycle depends on many factors, including the density of the fiber clusters mass, the air temperature, and the resistance of the perforated mold surface to air flow. For economic reasons it is preferable to work with a high air flow and thus minimize the duration of the heating cycle. However, fiber clusters are thermoplastic and will become less capable of resisting the crushing forces of the bonding air as the bonding temperature is reached. In order to reduce molding time, it is desirable to reduce the air flow rate during a bonding cycle so as to keep the crushing force of the forced air below the crush resistance of the heated clusters. Air pressure on the molded surface is controlled by an electrically controlled variable speed blower. The pressure drop across the molded part is monitored using a pressure reading or recording device, such as a manometer, not shown.

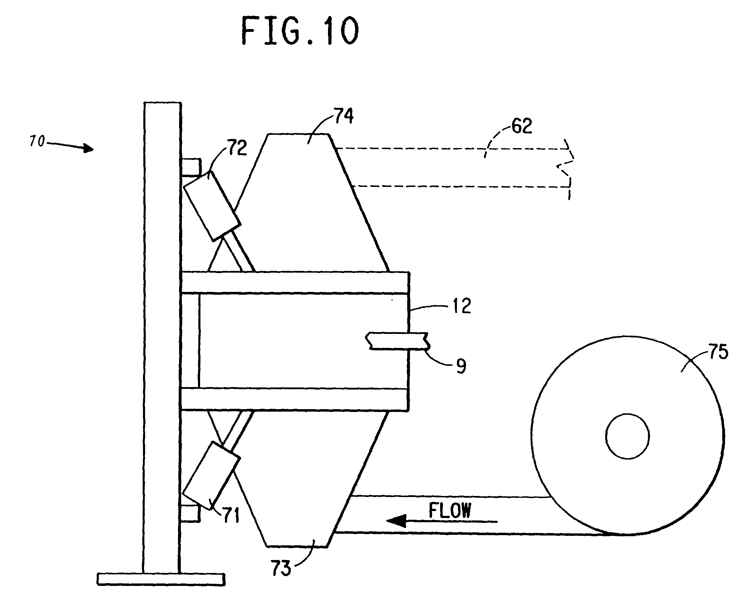

After mold 12 has been heated to the required temperature and time, hydraulic cylinders 61 and 62 are activated to release their contact with mold 12. Mold 12 is rotated to cooling station 70, as shown in Figs. 1 and 10. Hydraulic cylinders 71 and 72 are activated to position air ducts 73 and 74 into contact with mold 12 to provide a route of air circulation between the mold and the source of cooling air. Cool air is forced through mold 12 using electrically controlled variable speed blower 75 as indicated in Fig. 10. Again, the air flow can be through the bottom of mold 12, through the top of mold 12, or a combination of both directions. A substantial part of the energy can be recovered in the cooling zone and used to heat the air intake of the heating system by channeling the cooling air from mold 12 to oven 66 using air duct 62. Alternatively, this air stream can be directed to preheat station 80 of Fig. 1, where the preheated air is forced into mold 12 prior to the full heating cycle. This "preheating" will lower molding time at the heating station.

After the part has been sufficiently cooled, hydraulic cylinders 71 and 72 are activated to release their contact with mold 12 and the mold is rotated away from cooling station 70. The molded part is removed from mold 12. Removal can be accomplished manually or through automated means. To facilitate the unmolding of the cushion the bottom of mold 12 should preferably have a movable base, which can be pushed upwards to free the molded piece.

Optionally, the molded part may be encapsulated within a heat shrinkable polyester "bag" after molding. The encapsulating bag, upon heating, will conform to the shape of the molded part and provide durability and improved appearance to the part.

As an alternative to encapsulating with a scrim sheet or embedding upholstery anchor wire into the molded article, an end use covering can be molded directly onto the article. In particular, an automotive seat cushion having the desired final fabric, upholstery, or leather covering can be integrally molded with a seat cushion made from fiber clusters. In the past, porous fabrics have been bonded to foam material by methods employing superheated steam to melt a polymer adhesive layer, thereby bonding the seat covering to the foam seat. However, a steam process is limited in that it cannot be used to mold non-porous fabrics such as leather, and also has the disadvantages of utilizing expensive superheated steam and requiring condensate removal. In preparation for integral molding with fiber clusters, the desired final seat covering, for example leather, is cut to conform to the shape of the mold. Similarly, a thermoplastic adhesive film, such as the one manufactured by Bemis Associates, Shirley, MA is cut to conform to the shape of the mold. The leather covering is then placed in the mold, and the thermoplastic adhesive film is subsequently placed in the mold atop the leather covering. The mold is charged with fiber clusters, closed, and heated as discussed previously. Heating time can be determined by monitoring the air flow through the mold. A pressure drop indicates that the thermoplastic adhesive film has melted. Upon cooling and removal, a seat cushion having a final covering is obtained. The value of this integral seat cushion and covering process is obvious in light of the elimination of the subsequent and costly additional steps required to cover seat cushions.

## Claims

1. An automated process for molding recyclable cushions from loose fiber clusters comprised of polyester fibers and thermally bondable binder fibers, wherein the known process comprises loading a continuous fiber cluster web into a mold, placing the mold in an oven, placing the mold in a cooling chamber, and removing a molded cushion from the mold, and wherein the improvement comprises:
a) loading loose fiber clusters into the mold,
b) ducting heated air from an oven to the mold such that the thermally bondable binder fibers are melted without placing the mold in the oven, recovering exhaust air from the mold, and recycling the exhaust air to the oven, and
c) ducting cool air to the mold to cool the cushion, recovering exhaust air from the mold, and recycling the exhaust air to an air cooler, the oven, or a pre-heating station.

2. The automated process of claim 1 further comprising pulling a vacuum on the underside of the mold such that the loose fiber clusters are recieved and confined within the mold.

3. The automated process of claim 1 further comprising placing a seat covering material into the mold prior to loading the loose fiber clusters and placing a thermoplastic adhesive atop the seat covering material.

4. The automated process of claim 3 wherein the seat covering material is non-pourous.

5. The automated process of claim 4 wherein the seat covering material is leather.

6. The automated process of claim 1 further comprising encapsulating the loose fiber clusters within the mold.

7. The automated process of claim 6 wherein the encapsulation step further comprises lining a portion of the mold with a scrim sheet.

8. The automated process of claim 6 wherein the encapsulation step further comprises lining a portion of the mold with an encapsulation adhesive.

9. The automated process of claim 6 wherein the encapsulation step further comprises spraying encapsulation fibers into the mold.

10. The automated process of claim 6 wherein the encapsulation step further comprises placing the fiber clusters within individual scrim bags.

11. The automated process of claim 1 wherein the mold has a plurality of fill zones.

12. The automated process of claim 11 wherein the loading step further comprises varying the amount of loose fiber clusters introduced into the various fill zones of the mold such that a variable density article is produced.

13. The automated process of claim 12 wherein the loading step further comprises automatically introducing the loose fiber clusters into the mold using a programmable positioning device.

14. The automated process of claim 12 wherein the loading step further comprises using stationary hoses positioned over the mold to feed specific fill zones.

15. The automated process of claim 12 wherein the loading step further comprises using vertical pins which protrude through a bottom surface of the mold to different heights in the mold cavity, thereby further defining and segregating the fill zones.

16. The automated process of claim 12 wherein the loading step further comprises using a plurality of gating rods which protrude through a side surface of the mold, thereby further defining and segregating the fill zones.

17. The automated process of claim 12 wherein the loading step further comprises closing the mold and subsequently filling the mold via a plurality of fiber cluster flow inlets directed to the various fill zones within the mold.

18. The automated process of claim 12 wherein the loading step further comprises placing a plurality of individual bags of pre-weighed fiber clusters into the mold.

19. The automated process of claim 1 further comprising the step of encapsulating the molded cushion.

20. The automated process of claim 1 further comprising the step of placing an anchor wire into the mold prior to heating.

21. The automated process of claim 20 further comprising the step of coating the anchor wire with a polymer which has a melting point below the bonding temperature for the fiber clusters.

22. The automated process of claim 21 further comprising the step of embedding the coated wire into a polymer netting.

23. The automated process of claim 1 further comprising:
(a) positioning a base of a mold onto a holding plate connected to an arm of a rotatable table assembly;
(b) opening packed fiber clusters from a densified state to a loose state of lesser density;
(c) placing an encapsulation sheet onto the mold base prior to loading the fiber clusters, said encapsulation sheet having adhesive on the inside surface;
(d) loading loose fiber clusters comprised of polyester fibers and thermally bondable binder fibers onto the encapsulation sheet in the mold base to form an assembly of fiber clusters;
(e) rotating the mold base to a lid installation station wherein a mold lid is placed onto the mold to form a closed mold;
(f) rotating the closed mold to a heating station wherein hot air is ducted from an oven and forced through the assembly of fiber clusters in said mold such that the thermally bondable binder fibers are melted;
(g) rotating the closed mold to a cooling station wherein cool air is forced through said assembly of fiber clusters in the mold; and
(h) removing the molded cushion from the mold.

## Patentansprüche

1. Automatisiertes Verfahren zum Formpressen von wiederverwertbaren Polstern aus losen Faseragglomeraten, die Polyesterfasern und thermisch verschweißbare Bindefasern umfassen, bei dem das bekannte Verfahren das Einbringen einer kontinuierlichen Bahn aus Faseragglomeraten in eine Form, das Einbringen der Form in einen Ofen, das Einbringen der Form in eine Kühlkammer und die Entnahme des geformten Polsters aus der Form umfaßt, und bei dem die Verbesserung folgendes umfaßt:
a) Einfüllen von losen Faseragglomeraten in die Form,
b) Führen von erhitzter Luft von einem Ofen zu der Form, derartig, daß die thermisch verschweißbaren Bindefasern geschmolzen werden, ohne daß die Form in den Ofen gebracht wird, Rückgewinnen der Abluft aus der Form und Rückführung der Abluft zum Ofen, und
c) Führen von Kühlluft zu der Form, um das Polster zu kühlen, Rückgewinnen der Abluft aus der Form und Rückführung der Abluft zu einem Luftkühler, zum Ofen oder zu einer Vorwärmstation.

2. Automatisiertes Verfahren nach Anspruch 1, das außerdem das Ziehen eines Unterdrucks an der Unterseite der Form umfaßt, derartig, daß die losen Faseragglomerate innerhalb der Form aufgenommen und gehalten werden.

3. Automatisiertes Verfahren nach Anspruch 1, das außerdem vor dem Einfüllen der losen Faseragglomerate das Einbringen eines Sitzüberzugmaterials in die Form und das Einbringen eines thermoplastischen Klebers oben auf das Sitzüberzugmaterial umfaßt.

4. Automatisiertes Verfahren nach Anspruch 3, bei dem das Sitzüberzugmaterial nicht porös ist.

5. Automatisiertes Verfahren nach Anspruch 4, bei dem das Sitzüberzugmaterial Leder ist.

6. Automatisiertes Verfahren nach Anspruch 1, das außerdem die Umhüllung der losen Faseragglomerate innerhalb der Form umfaßt.

7. Automatisiertes Verfahren nach Anspruch 6, bei dem der Schritt der Umhüllung außerdem die Auskleidung eines Teils der Form mit einer Gazefolie umfaßt.

8. Automatisiertes Verfahren nach Anspruch 6, bei dem der Schritt der Umhüllung außerdem die Auskleidung eines Teils der Form mit einem Umhüllungsklebstoff umfaßt.

9. Automatisiertes Verfahren nach Anspruch 6, bei dem der Schritt der Umhüllung außerdem das Sprühen von Umhüllungsfasern in die Form umfaßt.

10. Automatisiertes Verfahren nach Anspruch 6, bei dem der Schritt der Umhüllung außerdem das Einbringen der Faseragglomerate innerhalb einzelner Gazebeutel umfaßt.

11. Automatisiertes Verfahren nach Anspruch 1, bei dem die Form eine Vielzahl von Füllzonen hat.

12. Automatisiertes Verfahren nach Anspruch 11, bei dem der Schritt des Einfüllens außerdem das Variieren der Menge der losen Faseragglomerate umfaßt, die in die verschiedenen Füllzonen der Form eingeführt werden, derartig, daß ein Artikel mit variabler Dichte hergestellt wird.

13. Automatisiertes Verfahren nach Anspruch 12, bei dem der Schritt des Einfüllens außerdem die automatische Einführung der losen Faseragglomerate in die Form unter Verwendung einer programmierbaren Positionierungsvorrichtung umfaßt.

14. Automatisiertes Verfahren nach Anspruch 12, bei dem der Schritt des Einfüllens außerdem die Verwendung von stationären Schläuchen umfaßt, die über der Form angeordnet sind, um bestimmte Füllzonen zu beschicken.

15. Automatisiertes Verfahren nach Anspruch 12, bei dem der Schritt des Einfüllens außerdem den Einsatz senkrechter Stifte umfaßt, die durch eine Bodenfläche der Form zu unterschiedlichen Höhen im Formhohlraum vorstehen, um dadurch die Füllzonen weiter zu definieren und abzutrennen.

16. Automatisiertes Verfahren nach Anspruch 12, bei dem der Schritt des Einfüllens außerdem den Einsatz einer Vielzahl von Absperrstäben umfaßt, die durch eine Seitenfläche der Form vorstehen, um dadurch die Füllzonen weiter zu definieren und abzutrennen.

17. Automatisiertes Verfahren nach Anspruch 12, bei dem der Schritt des Einfüllens außerdem das Schließen der Form und das anschließende Füllen der Form über eine Vielzahl von Einlässen für den Strom von Faseragglomeraten umfaßt, die zu den verschiedenen Füllzonen innerhalb der Form führen.

18. Automatisiertes Verfahren nach Anspruch 12, bei dem der Schritt des Einfüllens außerdem das Einbringen einer Vielzahl von einzelnen Beuteln von vorher abgewogenen Faseragglomeraten in die Form umfaßt.

19. Automatisiertes Verfahren nach Anspruch 1, das außerdem den Schritt der Einhüllung des geformten Polsters umfaßt.

20. Automatisiertes Verfahren nach Anspruch 1, das außerdem den Schritt der Einbringung eines Verankerungsdrahtes in die Form vor dem Erhitzen umfaßt.

21. Automatisiertes Verfahren nach Anspruch 20, das außerdem den Schritt der Beschichtung des Verankerungsdrahtes mit einem Polymer umfaßt, das einen Schmelzpunkt unter der Verschweißungstemperatur für die Faseragglomerate hat.

22. Automatisiertes Verfahren nach Anspruch 21, das außerdem den Schritt der Einbettung des beschichteten Drahtes in ein Polymergeflecht umfaßt.

23. Automatisiertes Verfahren nach Anspruch 1, das außerdem folgende Schritte umfaßt:
(a) Aufsetzen eines Unterteils einer Form auf eine Halteplatte, die mit einem Arm einer Drehtischeinheit verbunden ist;
(b) Öffnen der gepackten Faseragglomerate aus einem verdichteten Zustand zu einem-losen Zustand von geringerer Dichte;
(c) Aufbringen einer Umhüllungsfolie auf das Formunterteil vor dem Einfüllen der Faseragglomerate, wobei die Umhüllungsfolie auf der Innenfläche einen Kleber hat;
(d) Einfüllen von losen Faseragglomeraten, die Polyesterfasern und thermisch verschweißbare Bindefasern umfassen, auf die Umhüllungsfolie im Formunterteil, um eine Baugruppe aus Faseragglomeraten zu bilden;
(e) Drehen des Formunterteils zu einer Deckelaufsetzstation, in der ein Formdeckel auf die Form aufgesetzt wird, um eine geschlossene Form zu bilden;
(f) Drehen der geschlossenen Form zu einer Heizstation, in der heiße Luft von einem Ofen zugeführt und zwangsweise durch die Baugruppe aus Faseragglomeraten in der Form geführt wird, derartig, daß die thermisch verschweißbaren Bindefasern geschmolzen werden;
(g) Drehen der geschlossenen Form zu einer Kühlstation, in der Kühlluft zwangsweise durch die Baugruppe aus Faseragglomeraten in der Form geführt wird, und
(h) Entnahme des geformten Polsters aus der Form.

## Revendications

1. Procédé automatisé de moulage de coussins recyclables à partir d'amas de fibres détachés, composés de fibres de polyester et de fibres de liaison thermoliables, le procédé connu comprenant les étapes de chargement d'une nappe continue d'amas de fibres dans un moule, de placement du moule dans un four, de placement du moule dans une chambre de refroidissement et d'enlèvement du coussin moulé du moule, l'amélioration comprenant les étapes suivantes:
a) chargement d'amas de fibres détachés dans le moule;
b) guidage d'air chauffé d'un four vers le moule, de sorte à faire fondre les fibres de liaison thermoliables, sans placer le moule dans le four, récupération de l'air d'échappement du moule et recyclage de l'air d'échappement vers le four; et
c) guidage d'air froid vers le moule pour refroidir le coussin, récupération de l'air d'échappement du moule et recyclage de l'air d'échappement vers un refroidisseur d'air, le four ou une station de préchauffage.

2. Procédé automatisé selon la revendication 1, comprenant en outre l'étape d'établissement d'un vide sur le côté inférieur du moule, de sorte que les amas de fibres détachés sont reçus et confinés dans le moule.

3. Procédé automatisé selon la revendication 1, comprenant en outre l'étape d'agencement d'un matériau de couverture du siège dans le moule avant le chargement des amas de fibres détachés, et d'agencement d'un adhésif thermoplastique au-dessus du matériau de couverture du siège.

4. Procédé automatisé selon la revendication 3, dans lequel le matériau de couverture du siège est non poreux.

5. Procédé automatisé selon la revendication 4, dans lequel le matériau de couverture du siège est du cuir.

6. Procédé automatisé selon la revendication 1, comprenant en outre l'étape d'encapsulage des amas de fibres détachés dans le moule.

7. Procédé automatisé selon la revendication 6, dans lequel l'étape d'encapsulage comprend en outre la garniture d'une partie du moule d'une feuille de gaze.

8. Procédé automatisé selon la revendication 6, dans lequel l'étape d'encapsulage comprend en outre la garniture d'une partie du moule d'un adhésif d'encapsulage.

9. Procédé automatisé selon la revendication 6, dans lequel l'étape d'encapsulage comprend en outre la vaporisation de fibres d'encapsulage dans le moule.

10. Procédé automatisé selon la revendication 6, dans lequel l'étape d'encapsulage comprend en outre l'agencement des amas de fibres dans des sacs en gaze individuels.

11. Procédé automatisé selon la revendication 1, dans lequel le moule comporte plusieurs zones de remplissage.

12. Procédé automatisé selon la revendication 11, dans lequel l'étape de chargement comprend en outre la variation de la quantité d'amas de fibres détachés introduite dans les différentes zones de remplissage du moule, de sorte à produire un article à densité variable.

13. Procédé automatisé selon la revendication 12, dans lequel l'étape de chargement comprend en outre l'introduction automatique d'amas de fibres détachés dans le moule par l'intermédiaire d'un dispositif de positionnement programmable.

14. Procédé automatisé selon la revendication 12, dans lequel l'étape de chargement comprend en outre l'utilisation de tuyaux stationnaires positionnés au-dessus du moule pour alimenter des zones de remplissage spécifiques.

15. Procédé automatisé selon la revendication 12, dans lequel l'étape de chargement comprend en outre l'utilisation d'ergots verticaux débordant à travers une surface inférieure du moule, à des hauteurs différentes dans la cavité du moule, pour définir et séparer ainsi davantage les zones de remplissage.

16. Procédé automatisé selon la revendication 12, dans lequel l'étape de chargement comprend en outre l'utilisation de plusieurs tiges d'obturation débordant à travers une surface latérale du moule, pour définir et séparer ainsi davantage les zones de remplissage.

17. Procédé automatisé selon la revendication 12, dans lequel l'étape de chargement comprend en outre la fermeture du moule et le remplissage ultérieur du moule par l'intermédiaire de plusieurs entrées d'écoulement d'amas de fibres dirigés vers les différentes zones de remplissage dans le moule.

18. Procédé automatisé selon la revendication 12, dans lequel l'étape de chargement comprend en outre l'agencement de plusieurs sacs individuels d'amas de fibres prépesés dans le moule.

19. Procédé automatisé selon la revendication 1, comprenant en outre l'étape d'encapsulage du coussin moulé.

20. Procédé automatisé selon la revendication 1, comprenant en outre l'étape d'agencement d'un fil d'ancrage dans le moule avant le chauffage.

21. Procédé automatisé selon la revendication 20, comprenant en outre l'étape de revêtement du fil d'ancrage d'un polymère ayant un point de fusion inférieur à la température de liaison des amas de fibres.

22. Procédé automatisé selon la revendication 21, comprenant en outre l'étape d'enrobage du fil revêtu dans un réseau polymère.

23. Procédé automatisé selon la revendication 1, comprenant en outre les étapes ci-dessous:
(a) positionnement d'une base d'un moule sur une plaque de retenue connectée à un bras d'un assemblage de table rotative;
(b) ouverture des amas de fibres tassés, d'un état dense vers un état détaché à densité réduite;
(c) agencement d'une feuille d'encapsulage sur la base du moule avant le chargement des amas de fibres, ladite feuille d'encapsulage comportant un adhésif sur sa surface interne;
(d) chargement des amas de fibres détachés, composés de fibres de polyester et de fibres de liaison thermoliables sur la feuille d'encapsulage dans la base du moule pour former un assemblage d'amas de fibres;
(e) transfert par rotation de la base du moule vers une station d'installation du couvercle dans laquelle un couvercle du moule est agencé sur le moule pour former un moule fermé;
(f) transfert par rotation du moule fermé vers une station de chauffage, dans laquelle de l'air chaud est guidé à partir d'un four et entraîné à travers l'assemblage d'amas de fibres dans ledit moule, de sorte à faire fondre les fibres de liaison thermoliables;
(g) transfert par rotation du moule fermé vers une station de refroidissement, dans laquelle de l'air froid est entraîné à travers ledit assemblage d'amas de fibres dans le moule; et
(h) enlèvement du coussin moulé du moule.
